# EUROPÄISCHE PATENTSCHRIFT

(11) **EP 1 299 566 B1**
(45) Veröffentlichungstag und Bekanntmachung des Hinweises auf die Patenterteilung: **01.03.2006**
(21) Anmeldenummer: 01937843.9
(22) Anmeldetag: 28.05.2001
(51) Int. Cl.: C21B 3/08

(54) **VORRICHTUNG ZUM ZERSTÄUBEN UND GRANULIEREN VON FLÜSSIGEN SCHLACKEN**
DEVICE FOR ATOMIZING AND GRANULATING LIQUID SLAGS
DISPOSITIF POUR PULVERISER ET GRANULER DES SCORIES LIQUIDES

(30) Priorität: 07.07.2000 AT 11682000
(43) Veröffentlichungstag der Anmeldung: 09.04.2003
(73) Patentinhaber: Holcim Ltd., 8050 Zürich (CH)
(72) Erfinder: EDLINGER, Alfred, A-6780 Bartholomäberg (AT)
(74) Vertreter: Haffner, Thomas M.
(86) Internationale Anmeldenummer: PCT/AT2001/000168
(87) Internationale Veröffentlichungsnummer: WO 2002/004687

(56) Entgegenhaltungen:
- WO-A-00/32306
- WO-A-99/42623
- DE-A- 4 019 563
- GB-A- 1 413 651
- LU-A- 81 385
- US-A- 2 402 441
- US-A- 2 450 978
- US-A- 3 891 730
- DATABASE WPI Section Ch, Week 198615 Derwent Publications Ltd., London, GB; Class J08, AN 1986-097202 XP002177853 & JP 61 041884 A (SUMITOMO METAL IND LTD), 28. Februar 1986 (1986-02-28)

## Beschreibung

Die Erfindung bezieht sich auf eine Vorrichtung zum Zerstäuben und Granulieren von flüssigen oxidischen Schlacken, wie z.B. Konverterschlacken, Hochofenschlacken oder Müllverbrennungsschlacken, mit einem Schlackentundish mit einer Auslauföffnung, in welche eine höhenverstellbare Lanze für einen Treibstrahl mündet und an welche eine Kühlkammer angeschlossen ist, und mit einem konzentrisch zur Auslauföffnung angeordneten Tauchrohr; welches zwischen sich und dem Rand der Auslauföffnung einen Ringspalt für den Auslauf der Schlacke ausbildet.

Aus der AT 406 262 B ist ein Verfahren zum Versprühen von oxidischen Schlacken bekanntgeworden, bei welchem flüssige Schlacke aus einem Tundish über ein Tundiahrohr ausgestoßen wurde, wobei in die flüssige Schlacke eine Lanze eingebracht wurde, über welche Treibgas und insbesondere wasserdampf eingestoßen wurde. Das Tundishrohr im Schlackenauslauf des Tundish, wie er in der AT 406 262 B dargestellt ist, konnte hiebei auch nach Art einer Lavaldüse ausgebildet werden, wobei aufgrund der überkritischen Bedingungen, unter welchen Heißdampf bzw. wasserdampf zugeführt wurde und aufgrund der nachfolgenden Möglichkeit einer raschen Expansion, auch Dampfatramungsgeschwindigkeiten im Überschallbereich beobachtet wurden. Bei dieser bekannten Einrichtung wurde somit eine schlackenschmelze mit Temperaturen zwischen etwa 1300° und 1500° C unter Verwendung von Beißdampf als Treibmedium ausgestoßen wobei anschließend in der Kühlkammer eine rasche Abkühlung durch Umsetzung von Kohlenstoff bzw. Kohlenstoffträgern mit Wasserdampf und der Schlackenwärme zu Kohlenmonoxyd und B₂ erfolgt, wodurch reduzierende Bedingungen erzielt wurden. Das Treibdampfstrahlrohr war koaxial zur Tundishauslauföffnung orientiert. Prinzipiell sind mit einer derartigen Einrichtung aber nur, beschränkte Regelmöglichkeiten geboten und es ist insbesondere der Treibgasverbrauch ebenso wie der Verbrauch an Kühlmittel überaus hoch, wobei eine hohe Gasmenge benötigt wird und eine hohe Gasmenge durch Umsetzung gebildet wird.

Aus der WO 00/32306 ist es nun zusätzlich bekanntgeworden, konzentrisch zum Tundishauslauf ein Tauchrohr bzw. Drosselrohr eintauchend zu führen, wobei die Unterkante dieses Drosselrohres in Höhenrichtung verstellbar gelagert war. Mit einem derartigen Drosselrohr gelingt es nun die Dicke des Mantels des rohrförmig austretenden Schlackenstrahles entsprechend einzustellen, wobei jedoch auch hier der Treibstrahl im wesentlichen in axialer Richtung eingestossen wurde. Aufgrund des Drosselrohres konnte allerdings ein unmittelbares Eintauchen der Lanze in die Schlacke vermieden werden, da die Treibstrahllanze im Inneren des Drosselrohres geführt war. Die Zerkleinerungskräfte gelangen bei derartigen Ausbildungen prinzipiell als Scherkräfte zur Wirkung, wobei ein im wesentlichen axial gerichteter Treibstrahl mit entsprechender Viskosität nach seiner Expansion im Inneren des diesen Treibstrahl konzentrisch umgebenden Mantels der flüssigen Schlacke eine Beschleunigung und damit entsprechende Scherkräfte induziert. Da die Viskosität von Gasen mit zunehmender Temperatur zunimmt, wurde extrem heißer Dampf eingesetzt, um hohe Scherkräfte und damit eine entsprechende Zerkleinerungswirkung zu gewährleisten. Die Zerkleinerungsleistung konnte noch dadurch verbessert werden, daß das Drosselrohr mit einem Deckel verschlossen ausgebildet wurde und an das Drosselrohr eine gedrosselte Gaszuführungsleitung mündet. Durch Ausbildung entsprechender Druckverhältnisse im Ringraum um die Lanze konnten auf diese Weise Resonanzeffekte genützt werden und entsprechend pulsierende Strahlen mit periodischen Druckstössen erzielt werden, wodurch die Tropfenzerkleinerung verbessert werden konnte.

Da die Scherkräfte im wesentlichen aufgrund der axialen Beschleunigung zur Wirkung kommt, ist aber auch bei dieser Ausbildung der Treibmediumverbrauch relativ hoch und die gesamte Bauhöhe der Einrichtung relativ groß.

US-A- 3 891 730 beschreibt eine Vorrichtung zum Zerstäuben von flüssigem Metall mit einem Zwischengefäβ mit einer Auslauföffnung, sowie mit einer im Bereich der Auslauföffnung mündenden lanze zur Zuführ von Zerstäubungsgas, wobei die Auslauföffnung einen Ringspalt bildet. Im Bereich der Düsenmündung der Lanze ist ein in lanzenrichtung verstellbarer leitkörperangeordnet, welcher das Zerstäubungsgas radial auslenkt. Ein (zusätzliches) Tauchrohr ist nicht vorgesehen.

Die Erfindung zielt nun darauf ab, eine Einrichtung der eingangs genannten Art dahingehend zu verbessern, daß mit wesentlich verringertem Treibgaseinsatz das Auslangen gefunden werden kann und gleichzeitig in einer wesentlich kürzer bauenden Einrichtung eine verbesserte Zerkleinerungsleistung unter Ausbildung noch feinerer Partikelgrößen ermöglicht wird. Zur Lösung dieser Aufgabe besteht die erfindungsgemäße Vorrichtung im wesentlichen darin, daß im Bereich der Düsenmündung der Lanze für den Treibstrahl ein in Achsrichtung der Lanze verstellbarer Leitkörper angeordnet ist, welcher den Treibstrahl in radialer Richtung auslenkt. Dadurch, daß im Bereich der Düsenmündung der Lanze nun ein in Achsrichtung der Lanze verstellbarer Leitkörper angeordnet ist, gelingt es, den Treibstrahl aus der im wesentlichen axialen Richtung in eine mehr oder minder radiale Richtung auszulenken, wodurch die freie Wegstrecke bis zum Auftreffen auf den Schlackenmantel wesentlich verringert wird. Die Einrichtung kann hiebei mit Vorteil so betrieben werden, daß der Treibstrahl unter überkritischen Bedingungen zugeführt wird, sodaß nach dem Verlassen der Düse eine rasche Expansion eintritt, bei welcher Beschleunigungen des Treibstrahles auf Überschallgeschwindigkeit erfolgen. Ein derartiger auf Überschallgeschwindigkeit beschleunigter Treibstrahl gelangt nun nach überaus kurzer Distanz bereits in Kollision mit dem flüssigen Mantel der ausströmenden Schlacke, sodaß eine besonders effiziente Zerkleinerungsleistung erzielt wird.

Ein wesentliches Kriterium für die ordnungsgemäße Funktion einer derartigen Einrichtung ist aber naturgemäß die Beherrschung der Erstarrungs- und der Korrosionsvorgänge, um die jeweils gewünschten Parameter der Strahlgeometrie bzw. der Stärke des austretenden Schlackenmantels entsprechend einzuhalten. Die eingesetzten Schlacken und insbesondere Konverterschlacken zeichnen sich in der Regel durch einen relativ hohen Eisenoxydgehalt aus, wodurch sich erhebliche Feuerfestprobleme ergeben. Ein entsprechender Schutz der mit einer derartigen Schlacke in Kontakt tretenden Bauteile kann in der Regel nur durch Ausbildung eines exakt definierten Schlackenpelzes erzielt werden, wofür umfangreiche Möglichkeiten für die Verstellung und ein Einstellung zur Verfügung gestellt werden müssen, um auch ein Anwachsen eines derartigen Schlackenpelzes auf das minimal gewünschte Ausmaß sicher zu beherrschen. Aufgrund der relativ feinen Zerkleinerung durch die mit Überschallgeschwindigkeit auf den Schlackenmantel auftreffenden halbradial gerichteten Treibgasstrahlen ist weiters zu berücksichtigen, daß neben der physikalischen Zerkleinerung auch chemische Vorgänge aufgrund der relativ großen spezifischen Oberflächen dieser kleinen erstarrenden Teilchen beschleunigt ablaufen. Eine besonders rasche Abkühlung gelingt, wie bereits vorgeschlagen, durch chemische Umsetzung des heißen Schlackenstrahles und des Treibdampfes mit Kohlenstoffträgern, wie beispielsweise Kohlenwasserstoff, wobei Kohlenmonoxid und Wasserstoff gebildet wird.

Bedingt durch die kleine Teilchengröße entsteht auf diese Weise im gebildeten Produkt ein relativ großer Anteil an pulverförmigem Eisen mit überaus geringer Partikelgröße, sodaß auch aus diesem Grund in der Folge unter reduzierenden Bedingungen gearbeitet werden sollte, um eine Selbstentzündung derartiger feinst verteilter Eisenteilchen zu vermeiden. Derartige feinst verteilte Eisenteilchen bzw. Eisenpulver stellen selbst wiederum ein hochwertiges Produkt dar, welches die Wirtschaftlichkeit des Verfahrens wesentlich verbessert, wenn es gelingt dieses Produkt ohne die Gefahr einer Reoxidation auszutragen. Mit Vorteil wird daher das erfindungsgemäße Verfahren reduzierend geführt, wobei die Ausbildung der hiefür geeigneten Einrichtung mit Vorteil so getroffen ist, daß im Bereich der Auslauföffnung oder unmittelbar anschließend an die Auslauföffnung konzentrisch zum Schlakkenstrahl radial einwärts gerichtete Auslässe für ein Kühlmedium angeordnet sind. Mit derartigen zusätzlichen radial einwärts gerichteten Auslässen für ein Kühlmedium, gelingt es nun die Vorrichtung so zu betreiben, daß auch hier das Kühlmedium unter überkritischen Bedingungen zugeführt wird, sodaß es nach dem Verlassen der Düse rasch expandiert und gleichfalls auf Überschallgeschwindigkeit beschleunigt werden kann. Der aus dem Tundish austretende im wesentlichen rohrförmige Schlackenmantel wird auf diese Weise in radialer Richtung nicht nur von innen durch die mit Überschallgeschwindigkeit expandierenden Teilchen des Treibstrahles, sondern von außen durch die mit Überschallgeschwindigkeit expandierenden Teilchen des Kühlmediums beaufschlagt, sodaß eine besonders effiziente Zerkleinerung und gleichzeitige Kühlung unter Ausbildung von besonders feinen Teilchen gelingt. Aufgrund der relativ kurzen Distanz, über welche sowohl der Treibstrahl als auch die Kühlmedien mit dem erstarrenden Schlackenstrahl in Wirkverbindung treten und aufgrund der überaus effizienten Kühlung kann sowohl die Gesamtmenge des eingesetzten Treibstrahles als auch die Gesamtmenge des Kühlmediums wesentlich verringert werden, sodaß geringere Gasmengen eingesetzt und geringere Gasmengen durch chemische Umsetzung gebildet werden. Unmittelbar im Anschluß an die feinste Zerstäubung durch Interaktion mit dem auf Überschallgeschwindigkeit beschleunigten Strahl bildet sich eine Reduktionswolke aus, in welcher sich das Gasvolumen wesentlich erhöht, da ja Kohlenwasserstoffe und Wasserdampf zur doppelten Volumsmenge Kohlenmonoxid und Wasserstoff umgesetzt werden.

Gleichzeitig gelingt es mit der Zufuhr des Kühlmediums in unmittelbarer Nachbarschaft oder sogar unmittelbar im Schlackenauslauf eine entsprechende Regelung der Kühlung dieser Bauteile zu gewährleisten und auf diese Weise den Verschleiß zu minimieren. Mit Vorteil ist die Ausbildung zu diesem Zweck so getroffen, daß die Schlackenauslauföffnung als torusförmiger Ring ausgebildet ist, an dessen Ringhohlraum eine Zuleitung und die radial einwärts gerichteten Auslässe für das Kühlmedium angeschlossen sind.

Eine besonders kleinbauende Einrichtung läßt sich im Rahmen der erfindungsgemäßen Vorrichtung dadurch erzielen, daß die Treibstrahldüse und/oder die Auslässe für das Kühlmedium als Lavaldüsen ausgebildet sind und der in der Treibstrahldüse angeordnete Leitkörper einen lichten Querschnitt zur Düsenmündung freiläßt, welcher sich in Ausstoßrichtung des Treibstrahles vergrößert. Die Verwendung von Lavaldüsen für die Düsenmündung der Lanze sowie die gleichzeitige Verwendung von Lavaldüsen im Bereich der Auslässe für das Kühlmedium erlaubt es bereits sehr kurz nach dem Austritt der entsprechenden Medien Überschallgeschwindigkeit zu erzielen, sodaß besonders kurze freie Wegstrecken genügen, um:die entsprechende zerkleinerungswirkung beim Auftreffen auf den Schlackenstrahl zu gewährleisten.

Mit Vorteil ist die Ausbildung hiebei so getroffen, daß der Druck des Kühlmediums höher als der Druck des Treibmittels eingestellt ist, wodurch gleichzeitig sichergestellt wird, daß der expandierende Treibstrahl bereits im Bereich des Auftreffens auf den flüssigen Schlackenmantel mit im Erstarren begriffenen Teilchen kollidiert. Diese gerade in Erstarrung befindlichen Teilchen zeichnen sich durch eine geringe mechanische Stabilität aus und es konnte überraschenderweise gefunden werden, daß das zerkleinerte Produkt geringere Korngrößen aufweist als sich bei zerkleinerung eines flüssigen Schlackenstrahles ergeben würde, dessen Tröpfchengröße von der Oberflächenspannung wesentlich beeinflußt ist.

Mit Vorteil wird als Treibstrahl ein Strahl aus Verbrennungsabgasen und Dampf eingesetzt, wobei weiters mit Vorteil als Kühlmittel gasförmige Kohlenwasserstoffe eingesetzt werden. Bei Verwendung dieser Medien kann bei vergleichsweise geringem Druck sichergestellt werden, daß überkritische Bedingungen und damit unterexpandierte Medien der jeweiligen Düse zugeführt werden, worauf anschließend eine rasche und heftige Expansion zur Erzielung der gewünschten Überschallgeschwindigkeiten erfolgt. Bei einer Kondensation von Wasser aus einem aus Verbrennungsabgasen und wasserdampf bestehenden Treibstrahl ergibt sich bei unterstöchiometrischer Verbrennung unmittelbar ein reduzierendes Gas (CO+H₂, Rest CO₂), welches neuerlich als Brenngas eingesetzt werden kann und eine Reoxidation von Eisenpulver verhindert. In jedem Fall ist mit Vorteil die Ausbildung so getroffen, daß das Treibmedium und/oder das Kühlmedium unter überkritischem Druck den Düsen zugeführt ist.

Wesentlich für die Wirtschaftlichkeit des mit einer derartigen Vorrichtung betriebenen Verfahrens ist, wie bereits eingangs genannt, die weitestgehende Einstellbarkeit an das jeweils gewählte Medium zur Kontrolle der Kühlparameter und der Zerkleinerungsparameter, was insbesondere, durch den in Achsrichtung der Lanze verstellbaren Leitkörper für den Treibstrahl besonders einfach gelingt. Mit Vorteil ist die Ausbildung hierbei so getroffen, daß der Leitkörper an seinem den Düsenquerschnitt bestimmenden Mantel Leitflächen, insbesondere gekrümmte Leitflächen, mit halbradialem bzw. tangentialem Verlauf trägt.

Mit Rücksicht auf die überaus kleinen gebildeten erstarrten Partikel und mit Rücksicht auf den Umstand, daß mit einer derartigen Vorrichtung in der Regel unter reduzierenden Bedingungen erfolgreich gearbeitet wird, wenn eine entsprechend kurze Baugröße erzielt werden soll, muß sichergestellt werden, daß die überaus feinen pulverförmigen Eisenpartikel so bald wie möglich abgetrennt werden, um eine Reoxidation und gegebenenfalls eine Brandgefahr zu verhindern. Eine derartige Abtrennung gelingt allerdings erst nach Unterschreiten des Curiepunktes und es kann daher die Ausbildung erfindungsgemäß mit Vorteil so getroffen sein, daß im Kühlraum oder anschließend an den Kühlraum ein Magnetscheider angeordnet ist. Derartiges magnetisches Eisenpulver mit vergleichsweise hoher Temperatur ist naturgemäß relativ leicht reoxidierbar. Da insgesamt aber reduzierende Bedingungen vorherrschen, muß lediglich dafür Sorge getragen werden, daß ein derartiges Metallpulver mit Inertgas beaufschlagt wird, sobald es aus dem pulverförmigen Schlackengemisch abgetrennt wird.

Um die Treibgaslanze entsprechend gegen übermäßigen Verschleiß zu sichern und weiters um sicherzustellen, daß die freie Wegstrecke zwischen der Mündung der Treibgaslanze und dem Auftreffen des Strahles auf den flüssigen Schlackenmantel so gering wie nur möglich gehalten wird, ist mit Vorteil die Ausbildung so getroffen, daß die Düsenmündung der Treibstrahllanze oberhalb der Unterkante des Tauchrohres angeordnet ist.

Insgesamt kann mit einer derartigen Einrichtung der Treibgas/Dampfverbrauch auf 0,05 - 0,15 Nm³/t Schlacke reduziert werden. Es werden nur geringe Kühlverluste beobachtet, wobei zur Kontrolle des anwachsenden Schlackenpelzes aber auch eine zusätzliche Heizung des Schlackentundish vorteilhaft sein kann. Die Minimierung des Treibgas/Dampfverbrauches ist hierbei auf die Verringerung der Freistrahllänge und die durch den Leitkörper erzielte Gasnutzung erzielbar.

Im allgemeinen wird Treibgas/Dampf bei Temperaturen zwischen 600° und 1250° C und ebenso wie das Kühlmedium im Druckbereich zwischen 2 und 10 bar eingesetzt. Die Zerstäubung kann auch in im wesentlichen horizontaler Richtung erfolgen, wobei im Granulier- bzw. Kühlraum auch ein Überdruck aufgebaut werden kann. Aufgrund der überaus feinen Partikel kann eine pneumatische Abförderung und eine Sichtung nachgeschaltet sein kann.

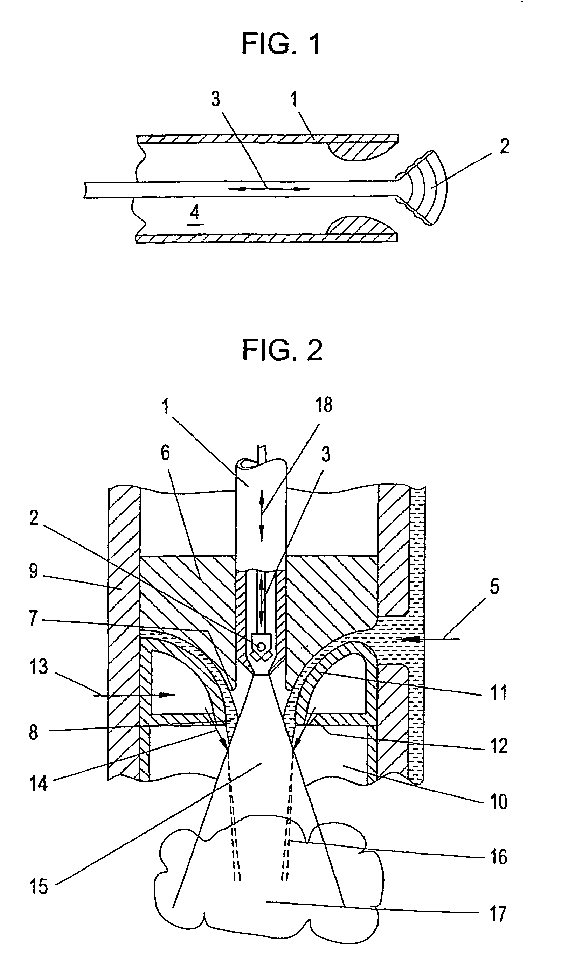

Die Erfindung wird nachfolgend anhand eines in der Zeichnung schematisch dargestellten Ausführungsbeispieles näher erläutert. In dieser zeigen Fig. 1 einen Querschnitt durch das Ende der Treibgaslanze und Fig. 2 einen Querschnitt durch den Schlackentundish mit dem Tundishauslauf sowie einer Treibmediumlanze.

In Fig. 1 ist eine Treibgaslanze mit 1 bezeichnet, deren Austrittsquerschnitt sich nach Art einer Lavaldüse verbreitert. In dem sich verbreiternden Querschnitt ist in Achsrichtung der Lanze verschiebbar ein Leitkörper 2 angeordnet, wobei die Verschieberichtung durch den Doppelpfeil 3 angedeutet ist. Die Lanze selbst kann horizontal oder vertikal orientiert sein, wobei über den Ringraum 4 zwischen dem Leitkörper und der Lanze Treibmedium, insbesondere Wasserdampf, zugeführt werden kann.

Die Wirkungsweise der Vorrichtung läßt sich anhand der Fig. 2 im Detail erkennen. Flüssige Schlacke wird aus einem Schlackenbehälter in Richtung des Pfeiles 5 in den Tundish ausgetragen, wobei zur exakten Definition einer bestimmten Wandstärke eines austretenden Schlackenstrahles ein Tauchrohr 6 vorgesehen ist, das bei der Ausbildung nach Fig. nach Art eines Stempels ausgebildet ist. zwischen der Unterkante 7 dieses Tauchrohres bzw.

Stempels 6 und der Schlackenauslauföffnung 8 des Schlackentundish 9 wird eine bestimmte Wandstärke der flüssigen Schlacke definiert, welche in der Folge in den nachgeschalteten Kühl- bzw. Granulierraum 10 austritt. Der Schlackenauslauf weist eine torusförmigen Hohlkörper 11 auf, an dessen Unterende radial einwärts gerichtete Düsen 12 ausgebildet sind. In den torusförmigen Hohlkörper 11 werden über eine Leitung 13 Kohlenwasserstoffe zugeführt, welche in Richtung des Pfeiles 14 radial einwärts austreten.

Im Inneren des Tauchrohres 6 ist wiederum die Lanze 1 angeordnet, in deren Innerem der Leitkörper 2 in Achsrichtung verschieblich gelagert ist. Die Lanze 1 selbst ist in Richtung des Doppelpfeiles 18 gleichfalls in Achsrichtung verschiebbar, sodaß die Geometrie des austretenden Treibgasstrahles 15 in weiten Grenzen einstellbar ist. Bei Ausbildung als Lavaldüse werden nach dem Austritt des Strahles Überschallgeschwindigkeiten erreicht und aufgrund des Leitkörpers wird eine rasche Verbreiterung des Strahles erzielt, sodaß der Treibstrahl 15 ebenso wie die einwärts gerichteten Strahlen der Düsen 12 für das Kühlmittel mit dem Schlackenmantel 16 kollidiert. Da beide Strahlen mit Überschallgeschwindigkeit auftreffen können, wird eine rasche und intensive Zerkleinerung erreicht, wobei sich in der Folge eine Wolke 17 ausbildet, in welcher aufgrund der chemischen Zersetzung des Kühlgases eine rasche Abkühlung unter gleichzeitig rascher Volumszunahme erfolgt. Die Kohlenwasserstoffe des Kühlmitttels, welche in Richtung des Pfeiles 14 austreten, werden hiebei zu CO und H₂ umgesetzt, wobei diese Umsetzung mit Dampf zu einer Volumsverdoppelung führt, da beide Medien überkritisch zugeführt werden können und daher nach dem Austritt aus den Düsen, insbesondere den Lavaldüsen, rasch expandieren, kommt es zu einer intensiven Zerkleinerungsarbeit und gleichzeitg zu einem raschen Abkühlen der flüssigen Schlacke, welche als rohrförmiger Mantel aus der Schlackenauslauföffnung 8 austritt.

## Patentansprüche

1. Vorrichtung zum Zerstäuben und Granulieren von flüssigen oxidischen Schlacken, wie z.B. Konverterschlacken, Hochofenschlacken oder Müllverbrennungsschlacken, mit einem Schlackentundish (9) mit einer Auslauföffnung (8), in welche eine höhenverstellbare Lanze (1) für einen Treibstrahl (15) mündet und an welche eine Kühlkammer (10) angeschlossen ist, und mit einem konzentrisch zur Auslauföffnung (8) angeordneten Tauchrohr (6), welches zwischen sich und dem Rand der Auslauföffnung (B) einen Ringspalt für den Auslauf der Schlacke ausbildet, **dadurch gekennzeichnet, dass** im Bereich der Düsenmündung der Lanze (1) für den Treibstrahl ein in Achsrichtung (3) der Lanze (1) verstellbarer Leitkörper (2) angeordnet ist, welcher den Treibstrahl (15) in radialer Richtung auslenkt.

2. Vorrichtung nach Anspruch 1, **dadurch gekennzeichnet, dass** im Bereich der Auslauföffnung (8) oder unmittelbar anschlie-Bend an die Auslauföffnung (8) konzentrisch zum Schlackenstrahl radial einwärts gerichtete Auslässe (12) für ein Kühlmedium angeordnet sind.

3. Vorrichtung nach Anspruch 1 oder 2, **dadurch gekennzeichnet, dass** die Schlackenauslauföffnung (8) als torusförmiger Ring (11) ausgebildet ist, an dessen Ringhohlraum eine Zuleitung (13) und die radial einwärts gerichteten Auslässe (12) für das Kühlmedium angeschlossen sind.

4. Vorrichtung nach Anspruch 1, 2 oder 3, **dadurch gekennzeichnet, dass** die Düsenmündung der Lanze (1) und/oder die Auslässe (12) für das Kühlmedium als Lavaldüsen ausgebildet sind und der in der Lanze (1) angeordnete Leitkörper (2) einen lichten Querschnitt zur Düsenmündung der Lanze (1) freilässt, welcher sich in Ausstoßrichtunq des Treibstrahles (15) vergrößert.

5. Vorrichtung nach einem der. Ansprüche 1 bis 4, **dadurch gekennzeichnet, dass** der Druck des Kühlmediums höher als der Druck des Treibmittels eingestellt ist.

6. Vorrichtung nach einem der Ansprüche 1 bis 5, **dadurch gekennzeichnet, dass** als Treibstrahl (15) ein Strahl aus Verbrennungsabgasen und Dampf eingesetzt ist.

7. Vorrichtung nach einem der Ansprüche 1 bis 6, **dadurch gekennzeichnet, dass** als Kühlmittel gasförmige Kohlenwasserstoffe eingesetzt werden.

8. Vorrichtung nach einem der Ansprüche 1 bis 7, **dadurch gekennzeichnet, dass** das Treibmedium und/oder das Kühlmedium unter überkritischem Druck den Düsen (12) zugeführt ist.

9. Vorrichtung nach einem der Ansprüche 1 bis 8, **dadurch gekennzeichnet, dass** der Leitkörper (2) an seinem den Düsenquerschnitt bestimmenden Mantel Leitflächen, insbesondere gekrümmte Leitfläehen, mit halbradialem bzw. tangentialem verlauf trägt.

10. Vorrichtung nach einem der Ansprüche 1 bis 9, **dadurch gekennzeichnet, dass** in der Klihlkammer (10) oder anschließend an die Kühlkammer (10) ein Magnetscheider angeordnet ist.

11. Vorrichtung nach einem der Ansprüche 1 bis 10, **dadurch gekennzeichnet, dass** die Düsenmündung der Lanze (1) oberhalb der Unterkante (7) des Tauchrohres (6) angeordnet ist.

## Claims

1. A device for atomizing and granulating liquid oxidic slags such as, e.g., converter slags, blast furnace slags or waste incineration slags, including a slag tundish (9) having an outlet opening (8) into which a height-adjustable lance (1) for a propellant jet (15) opens and to which a cooling chamber (10) is connected and including an immersion tube (6) arranged concentrically with the outlet opening (8), an annular gap being formed between the immersion tube (6) and the border of the outlet opening (8), **characterized in that** a guide body (2) capable of being adjusted in the axial direction (3) of the lance (1) is arranged in the region of the nozzle mouth of the lance (1) for the propellant jet (15), which guide body deflects the propellant jet (15) in the radial direction.

2. A device according to claim 1, **characterized in that** coolant outlets (12) which are directed radially inwards are arranged concentric with the slag jet in the region of the outlet opening (8) or immediately following upon the outlet opening (8).

3. A device according to claim 1 or 2, **characterized in that** the slag outlet opening (8) is designed as a torus-shaped ring (11) to whose annular cavity a coolant supply duct (13) and the radially inwardly directed coolant outlets (12) are connected.

4. A device according to claim 1, 2 or 3, **characterized in that** the nozzle mouth of the lance (1) and/or the coolant outlets (12) are designed as Laval nozzles and the guide body (2) arranged in the lance (1) leaves a clear cross section relative to the nozzle mouth, which widens in the direction of ejection of the propellant (15) jet.

5. A device according to any one of claims 1 to 4, **characterized in that** the pressure of the coolant is adjusted to be higher than the pressure of the propellant jet.

6. A device according to any one of claims 1 to 5, **characterized in that** a jet of combustion off-gases and vapor is used as said propellant jet (15).

7. A device according to any one of claims 1 to 6, **characterized in that** gaseous hydrocarbons are used as said coolant.

8. A device according to any one of claims 1 to 7, **characterized in that** the propellant medium and/or the coolant are fed to the nozzles (12) under supercritical pressure.

9. A device according to any one of claims 1 to 8, **characterized in that** the guide body (2), on its jacket defining the nozzle cross section, carries guide surfaces, in particular curved guide surfaces, having semi-radial or tangential courses.

10. A device according to any one of claims 1 to 9, **characterized in that** a magnetic separator is arranged within the cooling chamber (10) or following the cooling chamber (10).

11. A device according to any one of claims 1 to 10, **characterized in that** the nozzle mouth of the propellant jet lance (1) is arranged above the lower edge (7) of the immersion tube (6).

## Revendications

1. Dispositif pour pulvériser et mettre en granulés des scories liquides résultant d'une oxydation, telles que, par exemple, des scories de convertisseur, des scories de haut fourneau ou des scories d'incinération d'ordures, comportant un avant-creuset de scories (9) pourvu d'une ouverture de sortie (8), dans laquelle débouche une lance (1), réglable en hauteur, pour un jet de propulsion (15) et à laquelle fait suite une chambre de refroidissement (10), ainsi qu'un tube plongeur (6) disposé concentriquement à l'ouverture de sortie (8), lequel définit entre lui et le bord de l'ouverture de sortie (8), un interstice annulaire pour la sortie de la scorie, **caractérisé en ce que** dans la région de l'orifice d'éjection de la lance (1) pour le jet de propulsion, est disposé un corps directeur (2) ajustable dans la direction (3) de l'axe de la lance (1), lequel corps directeur dévie le jet de propulsion (15) en direction radiale.

2. Dispositif selon la revendication 1, **caractérisé en ce que** dans la région de l'ouverture de sortie (8) ou dans des positions directement adjacentes à l'ouverture de sortie (8), se trouvent, suivant une disposition concentrique au jet de scorie, des orifices d'échappement (12) pour un fluide de refroidissement, dirigés radialement vers l'intérieur.

3. Dispositif selon la revendication 1 ou 2, **caractérisé en ce que** l'ouverture de sortie de scorie (8) est définie par un anneau torique (11), à la cavité annulaire duquel sont raccordés un conduit d'arrivée (13) ainsi que les orifices d'échappement (12) pour le fluide de refroidissement dirigés radialement vers l'intérieur.

4. Dispositif selon la revendication1, 2 ou 3, **caractérisé en ce que** l'orifice d'éjection de la lance (1) et/ou les orifices d'échappement (12) pour le fluide de refroidissement, sont configurés sous la forme de buses de Laval, et le corps directeur (2), disposé dans la lance (1), laisse libre, par rapport à l'orifice d'éjection de la lance (1), une section transversale ouverte, qui s'agrandit dans la direction d'expulsion du jet de propulsion (15).

5. Dispositif selon l'une des revendications 1 à 4, **caractérisé en ce que** la pression du fluide de refroidissement est réglée à une valeur supérieure à celle de la pression de l'agent de propulsion.

6. Dispositif selon l'une des revendications 1 à 5, **caractérisé en ce qu'**un jet de gaz de combustion et de vapeur est utilisé comme jet de propulsion (15).

7. Dispositif selon l'une des revendications 1 à 6, **caractérisé en ce que** des hydrocarbures gazeux sont utilisés comme agent de refroidissement.

8. Dispositif selon l'une des revendications 1 à 7, **caractérisé en ce que** le fluide de propulsion et/ou le fluide de refroidissement est amené aux buses (12) sous une pression surcritique.

9. Dispositif selon l'une des revendications 1 à 8, **caractérisé en ce que**, sur son enveloppe déterminant la section transversale d'éjection, le corps directeur (2) porte des surfaces directrices, en particulier des surfaces directrices incurvées, d'allure semi-radiale ou tangentielle.

10. Dispositif selon l'une des revendications 1 à 9, **caractérisé en ce qu'**un séparateur magnétique est disposé dans la chambre de refroidissement (10) ou dans une position adjacente à la chambre de refroidissement (10).

11. Dispositif selon l'une des revendications 1 à 10, **caractérisé en ce que** l'orifice d'éjection de la lance (1) est disposé au-dessus de l'arête inférieure (7) du tube plongeur (6).
